# EUROPEAN PATENT APPLICATION

(11) **EP 2 423 719 A1**
(43) Date of publication of application: **29.02.2012**
(21) Application number: 10174303.7
(22) Date of filing: 27.08.2010
(51) Int. Cl.: G02B 6/245

(54) **Fiber stripping tool**

(71) Applicant: Tyco Electronics Raychem BVBA, 3010 Kessel-Lo (BE)
(72) Inventor: Petersen, Rainer, 3806 Velm (BE); Mattheus, Walter, 3010 Kessel-Lo (BE); Watté, Jan, 1851 Grimbergen (BE)
(74) Representative: Patentanwaltskanzlei WILHELM & BECK

(57) **Abstract**

A fiber stripping tool comprises a stripping unit for stripping a coating off an optical fiber comprising opposing blades (210,220) mounted to hinged holders (110,120) and a cleaning unit for cleaning the optical fiber comprising pads (310/320) wicked with a cleaning liquid dispensed via a pump (430) from a fluid dispenser (400) and also mounted to the hinged holders.

## Description

The invention relates to a fiber stripping tool for stripping an optical fiber according to claim 1 and to a method for stripping and cleaning an optical fiber according to claim 13.

The preparation of optical fibers for field-installable connectors and splices comprises steps for stripping the optical fiber, cleaning the optical fiber and cleaving the optical fiber. During the stripping step, a coating, e.g. a polymer or acrylate coating, is removed to expose the bare fiber surface. Once stripped, the fiber usually has to be cleaned to remove loose coating particles and other dirt before proceeding with the next process steps. In the following cleaving step the optical fiber is deliberately broken to create a perfectly flat end phase, perpendicular or at an angle to the longitudinal axis of the fiber.

Conventionally, the steps of stripping, cleaning and cleaving are performed separately and with different tools. From experience in the field the cleaning step is known to be critical. Cleaning fibers is usually done with a tissue drenched in cleaning fluid. The cleaning fluid ideally evaporates at room temperature, leaving no traces on the fiber. The tissues can be either disposable or reusable. Disposable tissue packages quickly dry out once opened. Applying fluid on a cleaning tissue from a separate container is cumbersome, especially in a spatially restricted environment.

DE 33 41 919 C1 describes an arrangement for cleaning a filler from optical fibers having primary protection. The arrangement comprises a protective cover with two cushions, which are impregnated with a cleaning fluid. The arrangement further comprising a bottle that contains cleaning fluid.

DE 40 07 762 A1 describes a method and an apparatus for stripping an optical fiber.

JP 09113732 A and JP 09152514 A describe further tools for removing a coating of an optical fiber. These tools comprise integrated mechanisms for cleaning the tools after stripping the optical fiber.

It is an object of the present invention to provide an improved fiber stripping tool for stripping an optical fiber. This objective is achieved by a fiber stripping tool according to claim 1. It is a further object of the invention to provide an improved method for stripping and cleaning an optical fiber. This objective is achieved by a method according to claim 11. Preferred embodiments are disclosed in the dependent claims.

A fiber stripping tool according to the present invention comprises a stripping unit for stripping a coating off an optical fiber and a cleaning unit for cleaning the optical fiber. Advantageously, this fiber stripping tool allows for stripping and cleaning the optical fiber in one single timesaving action in one application of the fiber stripping tool to the fiber. The fiber stripping tool according to the invention prevents that the cleaning step is forgotten. Furthermore, the fiber stripping tool according to the invention abolishes the need for separate cleaning material like tissues and cleaning fluid. The simplified processing of the optical fiber enabled by the fiber stripping tool according to the invention highly reduces the risk of damaging the optical fiber. The fiber stripping tool furthermore prevents static charges from building up on the optical fiber.

In a preferred embodiment, the stripping unit and the cleaning unit are arranged such that stripping and cleaning are done in one application step of the fiber stripping tool. In a further preferred embodiment the stripping unit and the cleaning unit are arranged one after another such that the optical fiber is first stripped and then the stripped optical fiber is cleaned.

In a preferred embodiment, the fiber stripping tool comprises a first part and a second part connected by a hinge joint. The fiber stripping tool can then be opened for inserting an optical fiber and can be closed for stripping and cleaning the optical fiber. Advantageously, this arrangement allows for an easy handling of the fiber stripping tool.

In a further preferred embodiment of the fiber stripping tool, the stripping unit is arranged between the cleaning unit an the hinge joint. Advantageously, the cleaning unit can then clean a part of the optical fiber where the coating of the optical fiber has been removed.

In a further preferred embodiment of the fiber stripping tool, the stripping unit comprises a first stripping blade arranged on the first part and a second stripping blade arranged on the second part. A blade edge of the first stripping blade faces a blade edge of the second stripping blade when the fiber stripping tool is closed. Advantageously, this arrangement of stripping blades allows for a reliable stripping of the optical fiber.

In a further preferred embodiment of the fiber stripping tool, the cleaning unit comprises a first sponge pad arranged on the first part and a second sponge pad arranged on the second part. Advantageously, this cleaning unit allows for a reliable cleaning of the optical fiber without damaging the optical fiber.

According to a further preferred development, the fiber stripping tool comprises a fluid dispenser with a fluid reservoir for dispensing a fluid to the cleaning unit. Advantageously, this arrangement further simplifies handling the fiber stripping tool.

In a preferred embodiment of the fiber stripping tool, the fluid dispenser comprises a pump mechanism for feeding an amount of fluid from the fluid reservoir to the cleaning unit. The pump mechanism is designed to be actuated upon closing the fiber stripping tool. Advantageously, this arrangement guarantees that a reasonable amount of cleaning fluid is used for cleaning the optical fiber.

According to one embodiment of the fiber stripping tool, the pump mechanism comprises a mechanical pin or bolt for delivering a displacement on a dispenser head upon closing the fiber stripping tool. Advantageously, this arrangement provides a reliable and robust pump mechanism.

In a preferred embodiment of the fiber stripping tool, the fluid reservoir comprises a window for monitoring a fluid level in the fluid reservoir. Advantageously, this allows a user of the fiber stripping tool to recognize when the fluid reservoir is running empty.

In one preferred embodiment of the fiber stripping tool, the fluid reservoir is designed as an exchangeable cartridge. Advantageously, this allows for an easy and comfortable replacement of the fluid reservoir.

A method for stripping and cleaning an optical fiber according to the present invention comprises steps of inserting the fiber into a stripping tool, closing the stripping tool, wherein a pump mechanism is actuated to dispense an amount of cleaning fluid to a cleaning unit arranged in the stripping tool, and pulling the optical fiber through the stripping tool, wherein a coating is stripped off the fiber and wherein the fiber is cleaned from residues. Advantageously, this method allows for stripping and cleaning the optical fiber in one application of the stripping tool, thereby saving time and reducing the risk of one processing step being forgotten.

The invention will now be explained in greater detail with reference to the figures in which
Figure 1 shows a sectional view of an optical fiber;
Figure 2 shows a schematic view of a first fiber stripping tool; and
Figure 3 shows a schematic view of a second fiber stripping tool.

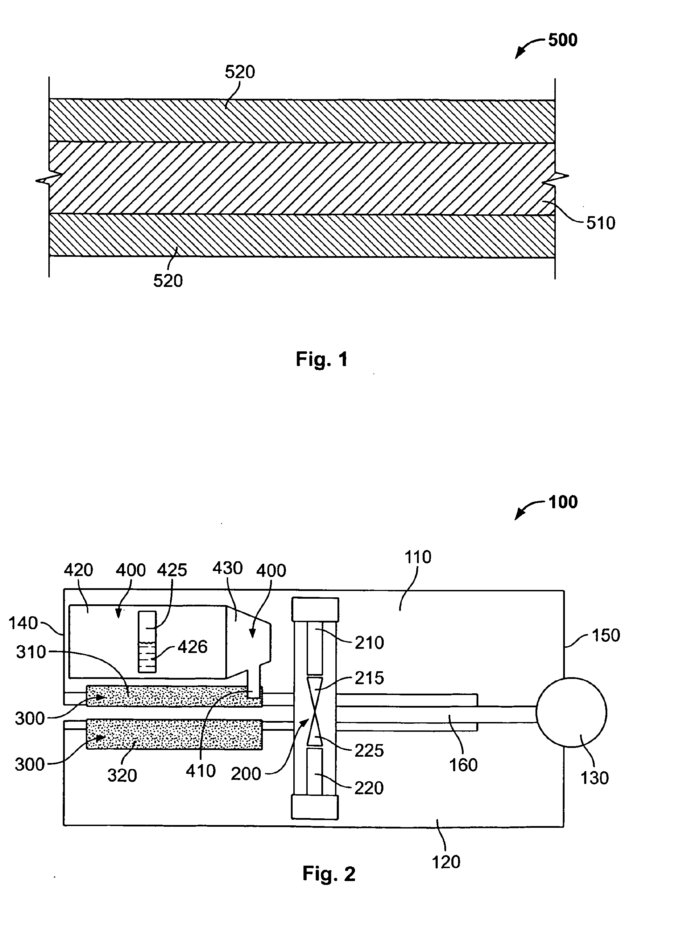

Figure 1 schematically shows a sectional view of an optical fiber 500. The optical fiber 500 comprises a fiber core 510 and a coating 520. The fiber core 510 constitutes the actual light guide and is designed to transmit light. The coating 520 serves to protect the fiber core 510 of the optical fiber 500. The coating 520 may for example be a polymer or acrylate coating. The coating 520 may also comprise several layers of the same material or of different materials. The coating 520 may have a thickness that is smaller or higher than the diameter of the fiber core 510.

Installing the optical fiber 500 may require to connect the optical fiber 500 to connectors or to form splices to couple two optical fibers to each other. This usually requires to remove the coating 520 of the optical fiber 500 to expose the bare fiber core 510 near an end of the optical fiber 500 or in a middle region of the optical fiber 500. The process of removing the coating 520 is referred to as stripping.

Stripping the optical fiber 500 usually leaves dirt on the fiber core 510 that has to be removed before proceeding with processing the optical fiber 500. Conventionally, cleaning is done with a tissue that was previously drenched in a cleaning fluid, for example an alcohol. This tissue is used to wipe the fiber core 510 clean and is then thrown away or kept for later reuse. Processing optical fibers, however, is often done in spatially restricted surroundings, where drenching the tissue in cleaning fluid and handling the tissue can become cumbersome.

Figure 2 schematically shows a first fiber stripping tool 100 that can be used for stripping the coating 520 off the optical fiber 500, for cleaning the fiber core 510 from residues and for neutralizing eventual electric charge that may have built up on the fiber core 510 in one working step.

The first fiber stripping tool 100 comprises a first part 110 and a second part 120. The first part 110 and the second part 120 are essentially bar-shaped and are connected by a hinge joint 130 near one of the narrow sides of the first part 110 and the second part 120. The first part 110 and the second part 120 are thus arranged as the arms of the letter V, making the first fiber stripping tool 110 resemble a stapler. The ends of the first part 110 and the second part 120 that are connected by the hinge joint 130 form an inner end 150 of the first fiber stripping tool 100, while the opposed ends of the first part 110 and the second part 120 form an outer end 140 of the first fiber stripping tool. Between the first part 110 and the second part 120 a fiber clearance 160 is formed for introducing the optical fiber 500.

The first fiber stripping tool 100 can be opened by pivotally moving the first part 110 and the second part 120 around the hinge joint 130, thereby increasing the angle between the first part 110 and the second part 120. Accordingly, the first fiber stripping tool 100 can be closed by pivoting the first part 110 and the second part 120 around the hinge joint 130, such that the angle between the first part 110 and the second part 120 decreases. In the closed position of the first fiber stripping tool 100 shown in Figure 2, the first part 110 and the second part 120 are arranged approximately in parallel.

The first fiber stripping tool 100 comprises a stripping unit 200 for stripping the coating 520 off the optical fiber 500. The stripping unit 200 comprises a first stripping blade 210 arranged on the first part 110 and a second stripping blade 220 arranged on the second part 120. The first stripping blade 210 has a first blade edge 215 and the second stripping blade 220 has a second blade edge 225. The first stripping blade 210 and the second stripping blade 220 are arranged such that the first blade edge 215 is directly opposed to the second blade edge 225 when the first fiber stripping tool 100 is in its closed position.

The first fiber striping tool 100 further comprises a cleaning unit 300 that is arranged close to the outer end 140 of the first fiber stripping tool. The stripping unit 200 is arranged between the cleaning unit 300 and the hinge joint 130. The cleaning unit 300 comprises a first sponge pad 310 arranged on the first part 110 and a second sponge pad 320 arranged on the second part 120. The first sponge pad 310 and the second sponge pad 320 are arranged such that the sponge pads 310, 320 are in contact with the optical fiber 500 if the optical fiber 500 is introduced to the fiber clearance 560 of the first fiber stripping tool 100 and the first fiber stripping tool 100 is closed.

The first fiber stripping tool 100 further comprises a fluid dispenser 400 for dispensing a cleaning fluid to the cleaning unit 300. In the example of the first fiber stripping tool 100 shown in figure 2, the fluid dispenser 400 is arranged on or in the first part 110. The fluid dispenser 400 may, however, also be arranged on or in the second part 120. The fluid dispenser 400 comprises a fluid reservoir 420 that holds a supply of cleaning fluid. The cleaning fluid may for example be an alcohol. The fluid dispenser 400 furthermore comprises a dispenser head 410 that is arranged in proximity to the first sponge pad 310 of the cleaning unit. The fluid dispenser 400 furthermore comprises a pump mechanism 430. The pump mechanism 430 is provided for pumping an amount of cleaning fluid from the fluid reservoir 420 via the dispenser head 410 to the first sponge pad 310 of the cleaning unit 300.

Application of the first fiber stripping tool 100 involves the following steps. The first fiber stripping tool 100 is opened and the optical fiber 500 is inserted in the fiber clearance 160 between the first part 110 and the second part 120. Depending on the longitudinal position of the optical fiber 500 where the coating 520 is to be removed, an axial end or an intermediate part of the optical fiber 500 is inserted in the fiber clearance 160.

Upon closing the first fiber stripping tool 100 the stripping blades 210, 220 are brought into position and penetrate the coating 520 of the optical fiber 500. Also the pump mechanism 430 is automatically actuated and pumps a well-defined amount of cleaning fluid from the fluid reservoir 420 via the dispenser head 410 to the first sponge pad 310 of the cleaning unit 300. The actuation of the pump mechanism 430 may for example happen by means of a mechanical pin or a mechanical bolt that delivers a displacement on the dispenser head 410.

With the first fiber stripping tool 100 closed, the optical fiber 500 is then pulled towards the outer end 140 of the first fiber stripping tool 100. This movement of the optical fiber 500 causes the first stripping blade 210 and the second stripping 220 of the stripping unit 200 to strip off the coating 520 of the optical fiber 500 in a longitudinal section of the optical fiber 500. The stripped section of the optical fiber 500 is then pulled through the cleaning unit 300 between the first sponge pad 310 and the second sponge pad 320, where any residues remaining in the stripped section of the optical fiber 500 are removed and where any electrical charge that may have built up in the stripped section of the optical fiber 500 is neutralized.

In the following step, the first fiber stripping tool 100 is opened and the optical fiber 500 is taken out. The optical fiber 500 is then ready for further processing, for example for cleaving the optical fiber 500.

If cleaning the optical fiber 500 requires more cleaning fluid than the amount that has been dispensed to the cleaning unit 300 by one pump operation of the pump mechanism 430, the pump action may be repeated without a stripping action by simply opening and closing the first fiber stripping tool 100 again. In a preferred embodiment of the first fiber stripping tool 100 the fluid dispenser 400 is constructed such that the pump mechanism 430 works independently of the orientation of the first fiber stripping tool 100 such that the fluid dispenser 400 is capable of dispensing the well-defined amount of cleaning fluid to the cleaning unit 300 also in an upside-down, horizontal or vertical orientation of the first fiber stripping tool 100.

In a preferred embodiment, the fluid reservoir 420 of the fluid dispenser 400 comprises a transparent window 425 that allows a user of the first fiber stripping tool 100 to monitor a fluid level 426 inside the fluid reservoir 420. This allows the user of the first fiber stripping 100 to anticipate when the fluid reservoir 420 is going to run empty soon. The cleaning fluid stored in the fluid reservoir 420 may either be replaced by refilling the fluid reservoir 420 or by replacing the entire fluid reservoir 420. To this end, the fluid reservoir 420 may be designed as an exchangeable cartridge that can easily be replaced by the user of the first fiber stripping tool 100.

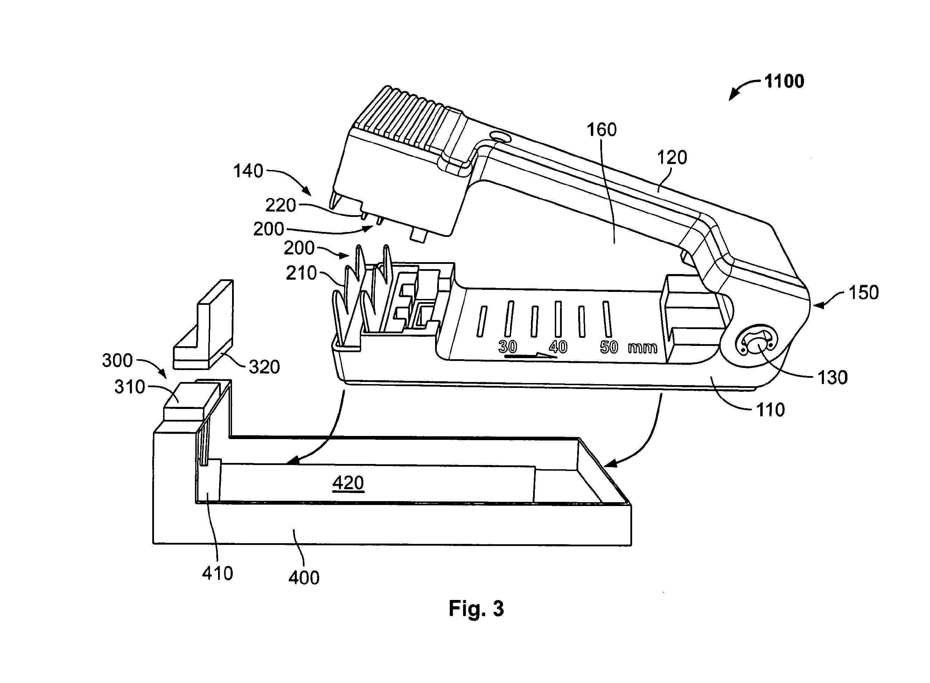

Figure 3 shows a schematic view of a second fiber stripping tool 1100 in a partially assembled state. Components that serve the same function as in the first fiber stripping tool 100 of figure 2 are labeled with the same reference numbers as in figure 2.

The second fiber stripping tool 1100 comprises a first part 110 and a second part 120 connected by a hinge joint 130 near an inner end 150 of the second fiber stripping tool 1100. Near an open outer end 140 of the second fiber stripping tool 1100 a stripping unit 200 with a first stripping blade 210 arranged on the first part 110 and a second stripping blade 220 arranged on the second part 120 is provided.

The second fiber stripping tool 1100 further comprises a cleaning unit 300 with a first sponge pad 310 and a second sponge pad 320. The first sponge pad 310 will be arranged on the outer end 140 of the first part 110 in a fully assembled state of the second fiber stripping tool 1100. The second sponge pad 320 will be arranged on the outer end 140 of the second part 120.

The second fiber stripping tool 1100 further comprises a fluid dispenser 400 with a dispenser head 410 and a fluid reservoir 420. The fluid dispenser 400 will be connected to the first part 110 when the second fiber stripping tool 1100 is fully assembled. The fluid dispenser 400 serves to dispense a well-defined amount of cleaning fluid to the cleaning unit 300 by means of a pump mechanism not shown in figure 3 upon closing the second fiber stripping tool 1100. Application of the second fiber stripping tool 1100 is performed as described above for the first fiber stripping tool 100.

## Claims

1. A fiber stripping tool (100, 1100),
comprising a stripping unit (200) for stripping a coating (520) off an optical fiber (500), **characterized in that**
the fiber stripping tool (100, 1100) comprises a cleaning unit (300) for cleaning the optical fiber (500).

2. The fiber stripping tool (100, 1100) according to claim 1,
**characterized in that**
the stripping unit (200) and the cleaning unit (300) are arranged such that stripping and cleaning are done in one application step of the fiber stripping tool (100, 1100).

3. The fiber stripping tool (100, 1100) according to claim 2,
**characterized in that**
the stripping unit (200) and the cleaning unit (300) are arranged one after another such that the optical fiber (500) is first stripped and then the stripped optical fiber (500) is cleaned.

4. The fiber stripping tool (100, 1100) according to any one of claims 1 to 3,
**characterized in that**
the fiber stripping tool (100, 1100) comprises a first part (110) and a second part (120) connected by a hinge joint (130),
wherein the fiber stripping tool (100, 1100) can be opened for inserting an optical fiber (500),
wherein the fiber stripping tool (100, 1100) can be closed for stripping and cleaning the optical fiber (500).

5. The fiber stripping tool (100, 1100) according to any one of claims 1 to 4,
**characterized in that**
the stripping unit (200) is arranged between the cleaning unit (300) and the hinge joint (130).

6. The fiber stripping tool (100, 1100) according to any one of claims 1 to 5,
**characterized in that**
the stripping unit (200) comprises a first stripping blade (210) arranged on the first part (110) and a second stripping blade (220) arranged on the second part (120),
wherein a blade edge (215) of the first stripping blade (210) faces a blade edge (225) of the second stripping blade (220) when the fiber stripping tool (100, 1100) is closed.

7. The fiber stripping tool (100, 1100) according to any one of the previous claims,
**characterized in that**
the cleaning unit (300) comprises a first sponge pad (310) arranged on the first part (110) and a second sponge pad (320) arranged on the second part (120).

8. The fiber stripping tool (100, 1100) according to any one of the previous claims,
**characterized in that**
the fiber stripping tool (100, 1100) comprises a fluid dispenser (400) with a fluid reservoir (420) for dispensing a fluid to the cleaning unit (300).

9. The fiber stripping tool (100, 1100) according to claim 8,
**characterized in that**
the fluid dispenser (400) comprises a pump mechanism (430) for feeding an amount of fluid from the fluid reservoir (420) to the cleaning unit (300),
wherein the pump mechanism (430) is designed to be actuated upon closing the fiber stripping tool (100, 1100).

10. The fiber stripping tool (100, 1100) according to claim 9,
**characterized in that**
the pump mechanism (430) comprises a mechanical pin or bolt for delivering a displacement on a dispenser head (410) upon closing the fiber stripping tool (100, 1100).

11. The fiber stripping tool (100, 1100) according to any one of claims 8 to 10,
**characterized in that**
the fluid reservoir (420) comprises a window (425) for monitoring a fluid level (426) in the fluid reservoir (420).

12. The fiber stripping tool (100, 1100) according to any one of claims 8 to 11,
**characterized in that**
the fluid reservoir (420) is designed as an exchangeable cartridge.

13. A method for stripping and cleaning an optical fiber (500),
**characterized by** the following steps:
- Inserting the fiber (500) into a stripping tool (100, 1100);
- Closing the stripping tool (100, 1100), wherein a pump mechanism (430) is actuated to dispense an amount of cleaning fluid to a cleaning unit (300) arranged in the stripping tool (100, 1100);
- Pulling the fiber (500) through the stripping tool (100, 1100), wherein a coating (520) is stripped off the fiber (500) and wherein the fiber (500) is cleaned from residues.
